# EUROPEAN PATENT APPLICATION

(11) **EP 4 431 911 A1**
(43) Date of publication of application: **18.09.2024**
(21) Application number: 23162464.4
(22) Date of filing: 16.03.2023
(51) Int. Cl.: G01N 21/03

(54) **SAMPLE MOUNT FOR A MICROSCOPE**

(71) Applicant: European Molecular Biology Laboratory, 69117 Heidelberg (DE)
(72) Inventor: BONDARENKO, Vladyslav, 69117 Heidelberg (DE); KROMM, Dimitri, 69117 Heidelberg (DE); HIIRAGI, Takashi, 69117 Heidelberg (DE); HUFNAGEL, Lars, 69117 Heidelberg (DE); ELLENBERG, Jan, 69117 Heidelberg (DE)
(74) Representative: Sonnenberg Harrison Partnerschaft mbB

(57) **Abstract**

A sample mount (10) for imaging of at least one sample (50) comprises a hydrogel body (25) and at least one cavity (30). The cavity (30) is arranged in the hydrogel body (25) for holding the at least one sample (50) in a culturing environment (60).

## Description

The present disclosure relates to a sample mount for microscopy. The present disclosure relates in particular to a sample mount for imaging live samples.

### Background of the Invention

Embryonic implantation is a critical developmental stage in mammalian species due to embryo-maternal interactions. The placenta, for instance, provides nutritional support for embryonic growth. The role of embryo-uterus interactions in peri-implantation development, however, is difficult to examine due to inaccessibility of the implanted embryo *in utero* by means of experimental techniques, such as light-sheet microscopy.

Another approach is based on examining the embryo-uterus interactions *ex vivo* by placing a sample, such as the embryo, in a synthetic environment. One example of the synthetic environment are *ex vivo* environments that provide the sample with (bio)engineered conditions that resemble *in vivo* biochemical and mechanical conditions. However, there is a lack of (bio)engineered uterus-like microenvironments that provide conditions sufficiently similar to those of the natural environment of the embryo *in utero.*

There is a need for synthetic environments for the imaging of live samples, such as organoids, tissue explants, or embryos, in order to provide quantitative data at a high temporal and spatial resolution and simultaneously reduce a load of illumination light on the samples.

One example of a synthetic environment has been proposed by Bondarenko et al. (bioRxiv, 2022, DOI: 10.1101/2022.06.13.495767). An engineered uterus-like microenvironment to recapitulate mouse embryo development ex vivo up to E5.25 is disclosed. The engineered microenvironment enables imaging, using light-sheet microscopy, the mouse embryo during development.

### Summary of the Invention

The present disclosure relates to a sample mount for the imaging of live samples. The present disclosure relates in particular to a sample mount for the imaging of live samples that comprises a three-dimensionally structured hydrogel. The present disclosure further relates to a method of manufacturing the sample mount. The present disclosure moreover relates to a method of imaging of live samples. The at least one sample may be a mammalian sample. The at least one sample may comprise a single cell or a group of cells. The group of cells may be a cell cluster, e.g., a developing embryo, organ, or tissue. The group of cells may be an organoid, e.g., prepared in vitro, or a tissue sample obtained, e.g., from a biopsy.

The sample mount for the imaging of at least one sample comprises a hydrogel body and at least one cavity. The at least one cavity is arranged in the hydrogel body for holding and/or positioning the at least one sample in a culturing environment. The at least one cavity enables structurally supporting the at least one sample.

Providing a sample holder having a hydrogel body enables providing a biocompatible sample holder having biochemical properties that facilitate culturing the sample and/or development, such as growth, of the sample. The hydrogel body thus contributes to the culturing environment in which the sample is placed. The biocompatible sample holder comprising the hydrogel body further enables feeding the at least one sample on the hydrogel body. The hydrogel body further enables forming or shaping in the hydrogel body the at least one cavity having geometrical properties that emulate a geometrical context and mechanical properties of a natural environment of the at least one sample.

The culturing environment may comprise at least one gas, such as oxygen, nitrogen, and/or carbon dioxide, and/or a liquid culture medium. Providing the at least one gas enables providing the at least one sample in the culturing environment with atmospheric conditions that enables the exchange of the at least one gas with the at least one sample and/or with the liquid culture medium. The liquid culture medium enables culturing, i.e., growing and/or feeding, the at least one sample.

The at least one cavity may be dimensioned to allow for mechanical support, e.g., by adhesion and/or contact of the at least one sample to a wall of the cavity that is formed in the hydrogel body. The adhesion and/or contact of the at least one sample to a wall of the at least one cavity enables emulating a natural environment of the at least one sample. The adhesion and/or contact provides structural support for the at least one sample. The adhesion and/or contact also reduces drift of the at least one sample in the at least one cavity, thereby enabling positioning of the at least one sample. The positioning allows for tracking of individual samples over a course of one or more measurements.

The at least one cavity may be dimensioned to provide an extracellular matrix (ECM) for the at least one sample. The extracellular matrix enables adhesion of the at least one sample to the at least one cavity, cell-to-cell biochemical communication within the at least one sample, cell-to-ECM biochemical communication, differentiation of the at least one sample, development of the at least one sample, and/or growth of the at least one sample.

The sample mount may comprise a plurality of cavities, wherein the plurality of cavities is arranged along a first direction. The sample mount according to the further aspect allows to provide multiple samples in the sample mount.

The hydrogel body may comprise one or more hydrogels. In one aspect, the one or more hydrogels may be arranged in one or more layers.

The hydrogel body has one or more components. The one or more components may stem from an animal source, a plant and/or fungi source, and/or a chemically synthesized source. The one or more components may comprise one or more of amino acids, polypeptides, proteins, nucleotides, oligonucleotides, nucleic acids, carbohydrates, lipids, vitamins, cholines, and/or minerals. The one or more components may comprise one or more nutrients. The nutrients may be selected according to the at least one sample to be imaged. The one or more component may comprise biological cells. The hydrogel body may be made from the animal source, the plant and/or fungi source, and/or the chemically synthesized source. The one or more components enable manufacturing a sample holder that enable culturing and imaging the at least one sample. The one or more components enable feeding the at least one sample on the one or more components of the hydrogel body. The one or more components enable providing an extracellular matrix for the at least one sample.

The hydrogel body may comprise as the one or more components one or more of laminins, nidogens, collagens, glycoproteins, and/or proteoglycans.

The hydrogel body may comprise as the one or more components agarose.

The hydrogel body made from the chemically synthesized source as the one or more components comprises poly-ethylene glycol.

The hydrogel body may comprise several polymers. In one aspect, the hydrogel body may be made from a mixture of several hydrogels comprising the several hydrogels. The several hydrogels may have properties that differ among the several hydrogels. The several polymers may, e.g., differ in their chemical structures. The hydrogel mixture may comprise a fibrillar matrix.

In another aspect, the several hydrogels may be arranged in one or more layers. The one or more layers enable providing spatial gradients of physicochemical properties.

The hydrogel body may be cross-linked and/or coated with one or more of peptides, such as arginylglycylaspartic acid, and/or components found in a naturally occurring extracellular matrix, such as laminins, collagens, proteoglycans, glycoproteins, and/or enzymes. The cross-linking and/or the coating enables providing the extracellular matrix for the at least one sample.

The physicochemical properties of the hydrogel body may be manipulated by at least one of an enzymatic degradation, a non-enzymatic reaction, a UV-light radiation treatment, and/or an infrared-light (IR) radiation treatment. The manipulating of the physicochemical properties enables providing the extracellular matrix for the at least one sample.

The at least one cavity may extend along a second direction or is inclined relative to the second direction. In case the second direction is vertically arranged, this orientation of the at least one cavity allows for easy access to the at least one cavity from above for placing the at least one sample in the cavity and/or for accessing and/or manipulating the culturing environment from above. Furthermore, this orientation of the at least one cavity allows to make use of gravity, for instance for holding the liquid medium in the at least one cavity.

The sample mount may further comprise a connector attachable to the sample mount, wherein the sample mount (10) attached to the connector is arrangeable in a sample mount stack comprising a plurality of the sample mounts. Stacking multiple sample mounts in the sample mount stack allows to increase the efficiency and throughput of analyzing the samples in the sample mounts.

The connector may be adapted to fluidly connect the sample mount to the culture medium and/or the gas, to provide the culturing environment. Fluidly connecting the sample mount with the culture medium and/or the gas allows to provide a culture medium and/or the gas to the sample mounts arranged in the sample mount stack.

A microscope for imaging a sample comprises at least one illumination lens, at least one detection objective lens, and the sample mount according to the present disclosure. The at least one illumination lens may be an illumination objective lens. The at least one illumination objective lens has an illumination optical axis. The at least one detection objective lens has a detection optical axis. The detection optical axis is perpendicular to the illumination optical axis. The microscope may comprise additional elements such as cameras, filters, additional lenses, and/or mirrors (not shown). These additional elements are, for the sake of brevity, not explained in detail here. The camera may be a CCD detector or a CMOS detector. In aspect of the disclosure, the microscope may further comprise a control system to control illumination and culturing based on at least one image acquired from the at least one sample.

The microscope may comprise other types of light sheet microscopes such as microscopes using Oblique Plane Microscopy (OPM). Oblique Plane Microscopy is a light sheet microscopy technique that uses a single high numerical aperture microscope objective to both illuminate a tilted plane within the at least one sample and to collect fluorescence from the tilted illuminated plane. Correction optics are inserted between the primary microscope objective and the camera to allow a tilted plane within the at least one sample to be imaged.

The microscope may have a different arrangement from the afore-described arrangement with, for example, a tilted illumination axis, objectives having tilted optical axes, or an inclined light-sheet, in which a perpendicular illumination/detection scheme is implemented for light-sheet microscopy.

The plurality of cavities may be movable along at least one sampling direction. Moving of the cavities along the at least one sampling direction allows to increase the efficiency and throughput of analyzing the samples in the sample mount.

A method for manufacturing the sample mount for a microscope comprises providing a moldable hydrogel in a mold, inserting a stamp into the moldable hydrogel, hardening the hydrogel to form a hydrogel body by means of the mold and to form at least one cavity by means of the stamp, removing the stamp from the hardened hydrogel body.

The method may further comprise a step of treating a surface of the at least one cavity.

The hydrogel may be a liquid hydrogel.

In another aspect, the moldable hydrogel may be produced from pulverized hydrogel particles. The pulverized hydrogel particles may be mixed with water, with or without an addition of catalyzers (e.g. enzyme molecules, ions). The addition of the catalyzers enables adjusting a pH, an ion concentration, or an enzymatic activity to facilitate polymerization of the hydrogel particles. Mixing the pulverized hydrogel particles with water generates the moldable hydrogel. The mixture of the pulverized hydrogel particles with water results in gelation, resulting in the moldable hydrogel.

A method of imaging at least one sample in a microscope comprises the steps of providing the at least one sample in at least one cavity of the sample mount, providing a culturing environment in the at least one cavity, illuminating the at least one sample by means of at least one illumination objective lens having an illumination optical axis, and detecting light emitted or reflected by the at least one sample by means of at least one detection objective lens having a detection optical axis, the detection optical axis being, for example, perpendicular to the illumination optical axis. The method further comprises acquiring at least one image of the sample.

The method of imaging at least one sample may further comprise a step of moving the sample mount in at least one sampling direction, the at least one sampling direction being perpendicular to the detection optical axis and the illumination optical axis. The method of imaging at least one sample allows to image the sample in a culturing environment that enables growth and development of the at least one sample. The method further allows to maintain and/or adjust the culturing environment while imaging the at least one sample. The method further enables high throughput imaging.

### Description of the Figures

Fig. 1a shows a lateral cross-sectional view of the sample mount for imaging a sample according to one aspect of the disclosure.
Fig. 1b shows a lateral cross-sectional view of the sample mount for imaging the sample in the microscope according to another aspect.
Fig. 2 shows an enlarged lateral cross-sectional view of a cavity.
Fig. 3a shows a top view of the sample mount according to one aspect.
Fig. 3b shows a top view of the sample mount according to a further aspect.
Fig. 4a shows a lateral view of a sample mount arranged in a microscope for imaging the sample according to one aspect.
Fig. 4b shows a lateral view of a sample mount arranged in a microscope for imaging the sample according to another aspect.
Fig. 4c shows a lateral view of a sample mount arranged in a microscope for imaging the sample according to a further aspect.
Fig. 5a shows a top view of a sample mount arranged in a microscope for imaging the sample according to another aspect.
Fig. 5b shows a lateral cross-sectional view of two of the sample mounts of Fig. 1 arranged in a sample mount stack.
Fig. 6 shows a perspective view of the sample mount according to a further aspect.
Fig. 7 shows a perspective view of the sample mount according to a further aspect.
Fig. 8 shows schematic view of a medium exchange unit.
Fig. 9 shows a flowchart of a method for manufacturing of the sample mount.
Fig. 10 shows a stamp for forming the at least one cavity in the hydrogel.
Fig. 11 shows a flowchart of a method for imaging a sample.

### Detailed Description of the Invention

The invention will now be described on the basis of the figures. It will be understood that the embodiments and aspects of the invention described herein are only examples and do not limit the protective scope of the claims in any way. The invention is defined by the claims and their equivalents. It will be understood that features of one aspect or embodiment of the invention may be combined with a feature of a different aspect or aspects and/or embodiments of the invention.

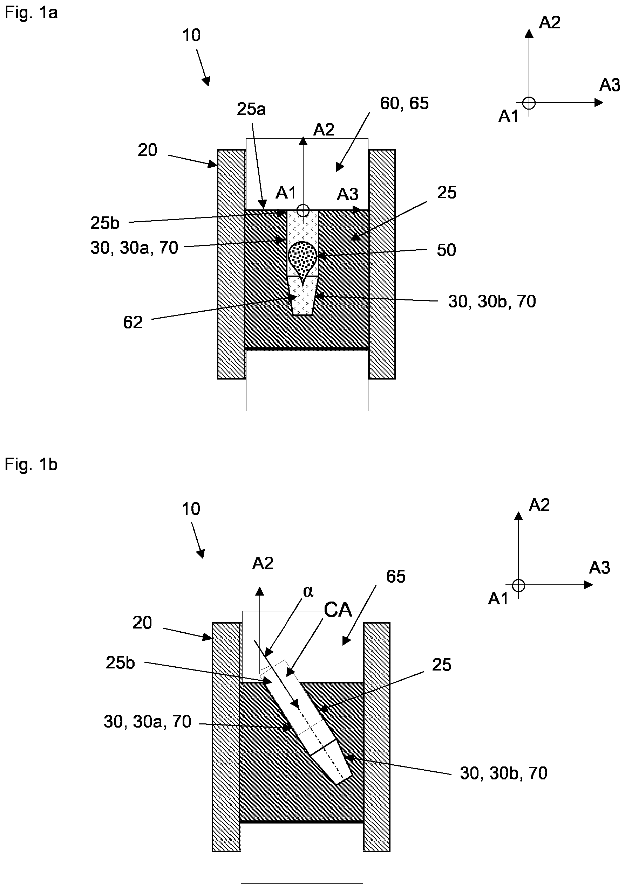

Fig. 1a shows a lateral cross-sectional view of a sample mount 10. The sample mount 10 facilitates imaging of at least one sample 50 in a microscope 80. The sample mount 10 facilitates, in particular, long-term live imaging of macroscopic tissue samples. These tissue samples may be, for example, peri- or post-implantation mammalian embryos, organoids, and/or tissue explants.

The sample mount 10 comprises a hydrogel body 25. The hydrogel body 25 may be transparent. The hydrogel body 25 may, in particular, be transparent to light used in fluorescence microscopy, such as light-sheet microscopy. The hydrogel body 25 may have a stiffness ranging between approximately 1 Pa and 10 MPa.

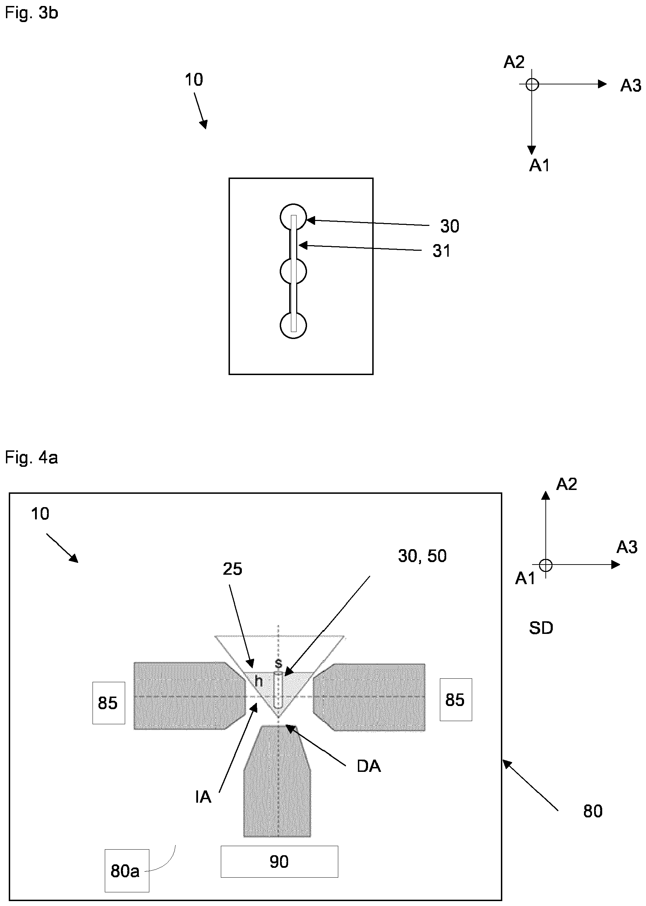

In the aspect shown in Fig. 1a, a surface 25a of the hydrogel body is horizontal. The surface 25 may be substantially planar. However, the surface 25a of the hydrogel body 25 is not limited to being horizontal or to being substantially planar. The surface 25a may have a non-horizontal surface or a non-planar surface. In one aspect, the surface 25a may face vertically upwards (see, e.g., Figs. 4a-c). In another aspect, the surface 25a may face in a different direction, such as in a horizontal direction or a downwards direction. In yet a further aspect, the hydrogel body 25 may several surfaces 25a. Ones of the several surfaces 25a may face in directions that are different from each other.

The sample mount 10 further comprises at least one cavity 30. The at least one cavity 30 is arranged in the hydrogel body 25. The at least one cavity 30 is arranged to hold the sample 50. The at least one cavity 30 comprises a wall 70 for providing the at least one sample 50 with a contact surface or an adhesion surface. The contact surface or adhesion surface comprises the wall 70. The contact surface or adhesion surface may further comprise a bottom/an ending in a direction of a cavity axis (see below) of the at least one cavity 30. The contact surface or adhesion surface may have a non-planar shape.

The at least one cavity 30 has an opening 25b. The opening 25b provides access to the least one cavity 30, which enables accessing the at least one sample 50 placed in the at least one cavity 30, e.g., for fluid communication with the at least one sample 50, or for arrangement of the at least one sample 50 within the at least one cavity 30. The opening 25b may be provided at the surface 25a. The at least one sample 50 may be arranged in the cavity 25 through the opening 25b. The at least one sample 50 may be provided with a culture medium and/or a gas. The gas may be provided via the opening 25b or via diffusion into the at least one cavity 30. The at least one cavity 30 may contain the culture medium and/or the gas.

The at least one cavity 30 may be configured to provide a culturing environment 60 for the at least one sample 50. The culturing environment 60 may comprise the culture medium and/or the gas. The culturing environment 60 may provide an extracellular matrix (not shown) for providing the at least one sample 50 with mechanical and or biochemical support. In one aspect, the extracellular matrix is a synthetic extracellular matrix. The extracellular matrix (ECM) provides an environment that enables one or more of adhesion of the at least one sample 50 to the wall 70, cell-to-cell biochemical communication within the at least one sample 50, cell-to-ECM biochemical communication to the at least one sample 50, differentiation of the at least one sample 50, development of the at least one sample 50, and/or growth of the at least one sample 50.

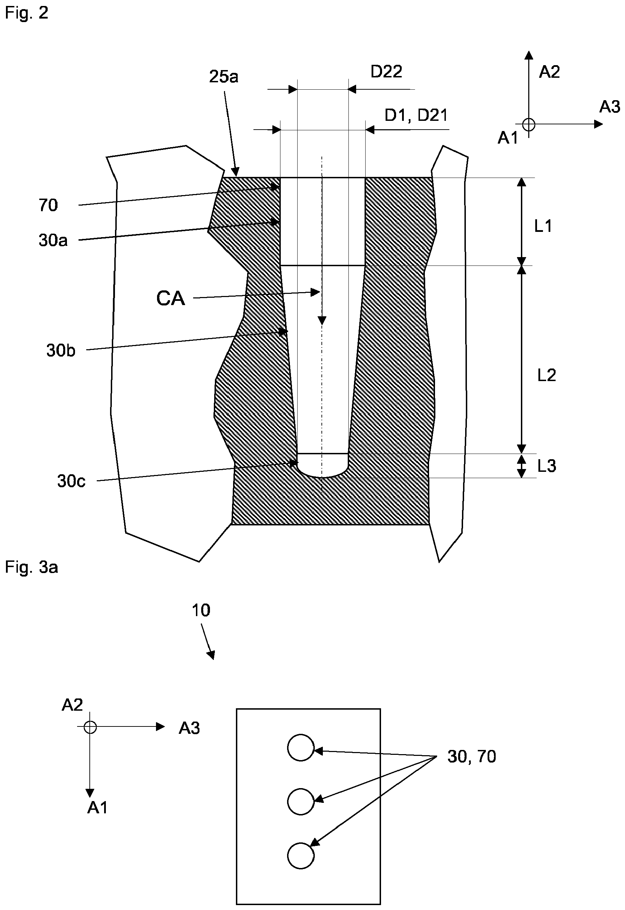

The hydrogel body 25 extends along a first direction A1, a second direction A2, and a third direction A3. Correspondingly, the hydrogel body 25 has a length extending along the first direction A1, a height extending along the second direction A2, and a width extending along the third direction A3. The first direction A1, the second direction A2, and the third direction A3 form a three-dimensional cartesian coordinate system. The first direction A1 and the third direction A3 are, for example, horizontal directions. The second direction A2 is, for example, a vertical direction. In one aspect, the cartesian coordinate system may be, for example, aligned with the surface 25a of the hydrogel 25 that is arranged to be horizontal and with a cavity axis CA (see Figs. 1b and 2) of the at least one cavity 30 that is arranged to be vertical. In another aspect, the cartesian coordinate system may be defined by an illumination optical axis IA and/or a detection optical axis DA (see below).

The hydrogel body 25 comprises one or more components. The hydrogel body 25 may comprise at least one polymer. The polymer may be a synthetic polymer, such as, but not limited to, polyvinyl alcohol, polyethylene glycol (PEG), sodium polyacrylate, acrylate polymers and copolymers thereof. The polymer may be a natural polymer, such as, but not limited to, hyaluronic acid, chitosan, heparin, alginate, and fibrin. The hydrogel body 25 may be made from an animal source. The animal source may comprise one or more of laminins, nidogens, collagens, glycoproteins, proteoglycans, and/or enzymes. The hydrogel body 25 may be made from a plant and/or fungi source. The plant and/or fungi source may comprise agarose.

In one aspect, the at least one polymer of the hydrogel body 25 may be cross-linked or chemically coupled via non-covalent bonds. The polymer of the hydrogel body 25 may be cross-linked with one or more peptides. The one or more peptides may include, for example, metalloprotease-cleavable peptides to facilitate interaction of the sample 50 with the wall of the at least one cavity 30. In particular, the hydrogel 25 of the at least one cavity 30 may be so cross-linked.

In another aspect, the hydrogel body 25 may be functionalized with one or more peptides. One example of the one or more peptides is RGDSPG (Arg-Gly-Asp-Ser-Pro-Gly).

In a further aspect, the at least one polymer of the hydrogel body 25 may be coated with one or more of peptides, such as arginyl glycyl aspartic acid, and/or extracellular matrix components, such as laminins, collagens, proteoglycans, and/or glycoproteins. In particular, the wall 70 of the at least one cavity 30 may be so coated.

In yet a further aspect, the hydrogel body may comprise several polymers. The hydrogel body may be made from a mixture of hydrogels comprising the several hydrogels. The several hydrogels may have properties that differ among the several hydrogels. The several polymers may, e.g., differ in their chemical structures.

The hydrogel body 25 may comprise a fibrillar matrix. The fibrillar matrix may be formed based on the one or more components of the hydrogel body 25. The fibrillar matrix may for example be formed from a combination of collagen with PEG and optionally Matrigel, a combination of Matrigel with collagen, or polymers derived from one or more of PEGs, fibrins, and polymers suitable for 3D-printing of fibrillar matrices compatible with the at least one sample 50. The fibrillar matrix may be formed from the several polymers. The fibrillar matrix structurally supports during growth the at least one sample 50, e.g., a mouse embryo or human embryo, held by the sample holder.

During manufacturing, the several hydrogels may be deposited in one or more layers (not shown). Physicochemical properties of the hydrogel body 25 may differ between ones of the one or more layers. Examples of the physiochemical properties are one or more concentrations of the one or more components of the hydrogel body 25, one or more stiffnesses of the one or more layers, one or more shapes of the one or more layers, etc.

In one aspect of the disclosure, the one or more hydrogels may be optimized for growth of the at least one sample 50, e.g., one or more cells, an organoid, tissue, or embryo. The one or more components of the one or more hydrogels may comprise one or more types of biological cells. For example, in the context of mouse embryogenesis ex vivo, uterine cells such as endometrium and stromal fibroblasts may be added to the one or more hydrogels (e.g., with PEG, collagen, and/or Matrigel) to support embryo growth. In the context of organ development, stromal cells surrounding a developing organ and/or a developing organoid may be added to the one or more hydrogels. In another aspect, the one or more hydrogels may include blood and/or immune cells, i.e., macrophages and/or leucocytes, for live imaging of multicellular interactions in reduced physiological systems. Other types of the biological cells may be mast cells and/or erythrocytes. The biological cells may be mixed with the one or more hydrogels. During the manufacturing of the sample mount 10, the biological cells may be added to the one or more hydrogels. Alternatively, the biological cells may be deposited on the surface 25a of the hydrogel body and/or on the wall 70 of the at least one cavity 30.

The physicochemical properties, e.g., the one or more stiffnesses or the ono or more shapes, of the one or more hydrogels are set and/or dynamically adjusted by at least one of an enzymatic degradation, a non-enzymatic reaction, an ultraviolet (UV) radiation treatment, an infrared (IR) radiation treatment, and/or laser treatment. The enzymatic degradation comprises using peptidases, such as metalloprotease, to adjust the physicochemical properties of the one or more hydrogels. The peptidases may be provided externally using additional media (with or without perfusion of the hydrogel matrix) or internally by the sample itself. In another aspect, the peptidases may be provided with the culturing medium The non-enzymatic degradation may comprise engineering the one or more hydrogels to enable hydrolysis. The UV radiation treatment may comprise using UV radiation for polymerization or de-polymerization of the one or more hydrogels. The IR radiation treatment may comprise polymerization or de-polymerization of the one or more hydrogels. The laser treatment may comprise using laser light to locally manipulate the physicochemical properties of the one or more hydrogels in the hydrogel body 25 using, for example, two-photon de-polymerization, which enables three-dimensional structuring of the hydrogel body 25. Laser treatment may comprise diffusion of the cross-linked molecules from the hydrogel body 25 into a treatment media, such as growth factors and signaling molecules.

In one aspect, the sample mount 10 may comprise a housing 20. The housing 20 may accommodate the hydrogel body 25. The housing 20 may be provided at a surface of the hydrogel body 25. In one aspect, the housing 20 may be made of a different material than the hydrogel body 25. In another aspect, the housing 20 may be made of a similar or identical material as the hydrogel body 25. In one aspect of the disclosure, the housing 20 may serve as a mold during manufacturing of the sample holder 10.

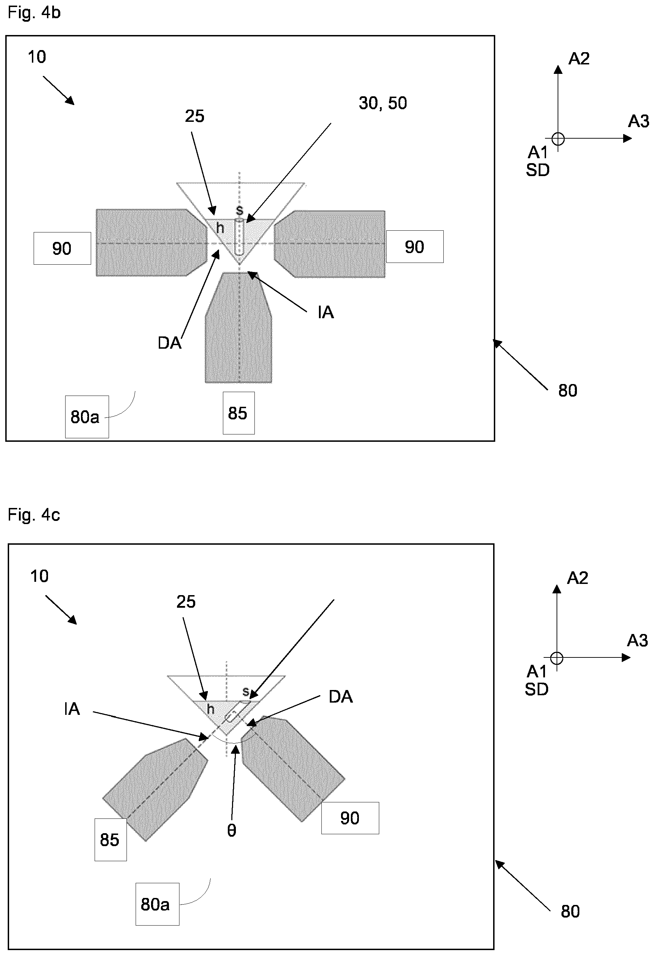

In one aspect, the housing 20 may be made of a transparent material. One example of the transparent material used for manufacturing the housing 20 is PDMS (polydimethylsiloxane). In one aspect of the disclosure, the transparent material used for manufacturing the housing 20 is selected to have a refractive index matching a refractive index of the hydrogel body 25 and/or of a surrounding immersion medium (PBS, water, etc.). Furthermore, the transparent material may have a thickness of < 100 µm. The transparent material may, for example, comprise fluorinated ethylene propylene (FEP) tubing/foil, polytetrafluoroethylene (PTFE), and/or tetrafluoroethylene (THV). The shape of the hydrogel body 25 may be configured such that a surface of the housing 20 is arranged perpendicular to an illumination optical axis IA of the illumination objective lens 85 (see, e.g., Fig. 4c). Furthermore, the shape of the hydrogel body 25 may be configured such that the housing 20 is arranged perpendicular to a detection optical axis DA of a detection objective lens 90 (see, e.g., Fig. 4c)

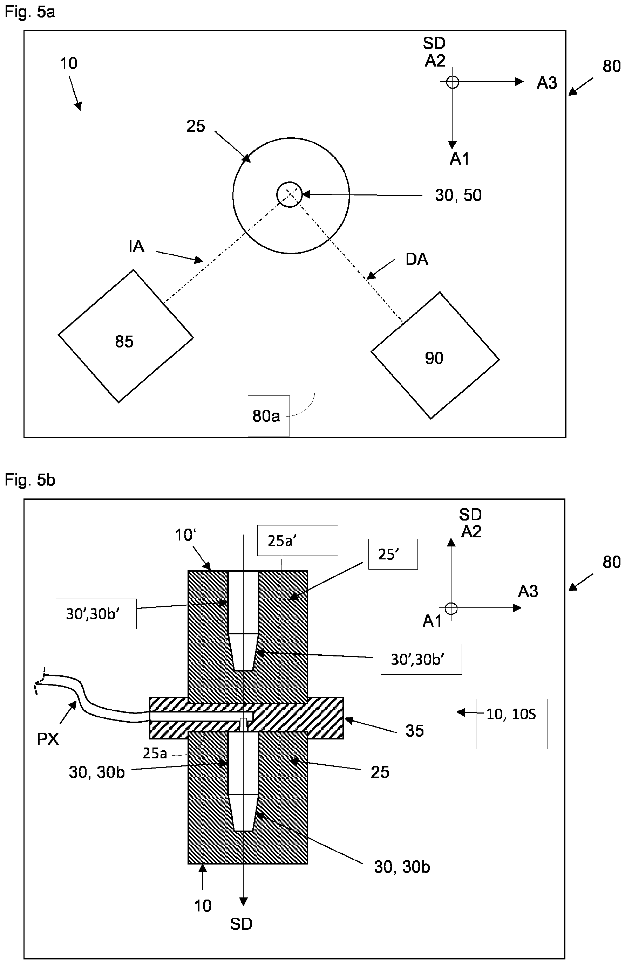

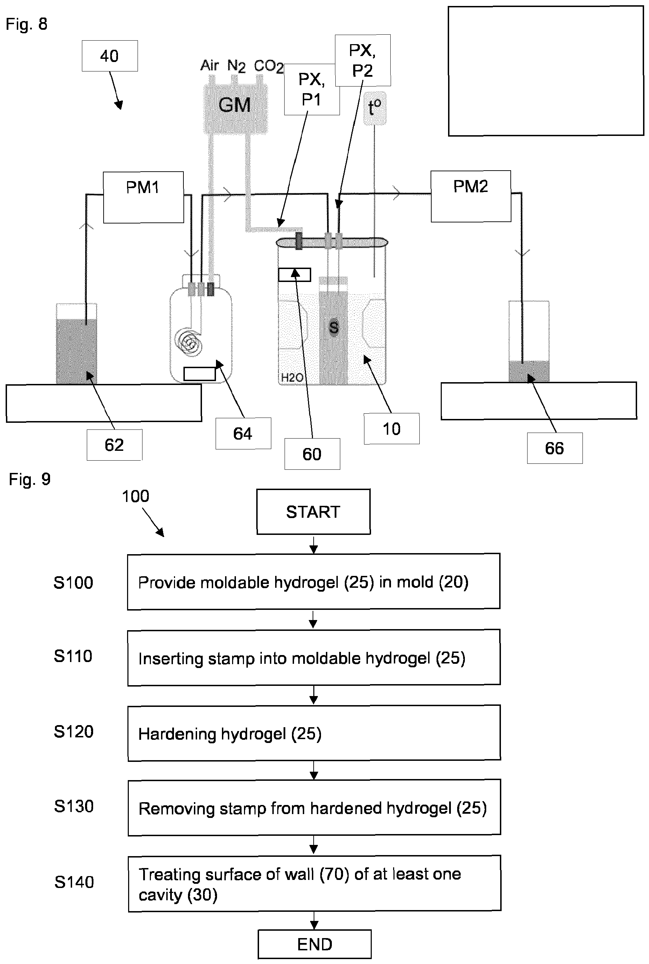

In one aspect of the disclosure, the housing 20 may be used to provide the gas, such as oxygen, nitrogen, and/or carbon dioxide, and/or the liquid culture medium. In this aspect, the housing 20 may be sealable. Furthermore, in this aspect the housing 20 may contain a supply space 65 for providing the at least one cavity 30 with the culture medium and/or the gas via the opening 25b. The supply space 65 may be part of the culturing environment 60. The supply space is arranged above the hydrogel body 25. The supply space 65 is fluidly connected to the at least one cavity 30 and enables supplying the at least one sample 50 held in the at least one cavity 30 with the culture medium and/or the gas. The culture medium and/or the gas may be provided by a perfusion unit 40 (see Fig. 8) to the supply space 65 and/or directly to the hydrogel body 25. The perfusion unit 40 may comprise a microfluidic unit (not shown). The microfluidic unit may comprise microtubing PX (see Fig. 5b) for one or more fluid connections. The microfluidic unit may fluidly connect one or more of the sample holder 10, the supply space 65, and the at least one cavity 30 with the perfusion unit 40. The microfluidic unit may further comprise microchannels 31 (see below). The perfusion may be fluidly connected to the supply space 65 of the housing 20. The perfusion unit that is fluidly connected to the housing 20 serves to exchange the culture medium and/or the gas. The perfusion unit may be fluidly connected to the housing 20 via, e.g., tubing (not shown). The exchange of the culture medium and/or the gas enables long-term culturing of the at least one sample 50. The long-term culturing of the at least one sample 50 enables long-term imaging of the at least one sample 50.

Fig. 1b shows a lateral cross-sectional view of the sample mount 10 for imaging the sample 50 in the microscope 80 according to a further aspect of the disclosure. In this aspect, the cavity 30 is inclined relative to the second direction A2. An angle α between the negative second direction A2 and the cavity axis CA may be, for example, smaller than or equal to 90° (ninety degrees). For example, the angle α may be smaller than or equal to 60° (sixty degrees). In another aspect, the angle α may be smaller than or equal to 45° (forty-five degrees). However, the angle α may be equal to 90° (i.e., an arrangement with a horizontal cavity axis CA) or even larger than 90°. The angle α may depend on the design of a stamp 28 (see below), the dimensions of the at least one cavity 30, the design of the housing 20. The inclined arrangement of the at least one cavity 30, shown in Fig. 1b, is useful for inverted light-sheet microscopy, in which the illumination optical axis IA of the illumination objective lens 85 is arranged at an illumination angle relative to a horizontal direction, and/or and the detection optical axis DA of the detection objective lens 90 is arranged at a detection angle relative to the horizontal direction.

Fig. 2 shows an enlarged lateral cross-sectional view of an aspect of the cavity 30 according to one aspect of the disclosure. The cavity 30 extends along the cavity axis CA. The cavity axis CA may be parallel to a second direction A2. The cavity 30 comprises at least a first section 30a and a second section 30b. The first section 30a and the second section 30b may be arranged adjacently along the cavity axis CA. In another aspect, the at least one cavity 30 may have more than two sections. In yet a further aspect, the at least one cavity 30 may have a shape different from the one shown in Fig. 2. For example, the at least one cavity 30 may a well-like shape. In another aspect, the shape of the at least one cavity 30 may deviate from the cavity axis CA being straight, as shown in Fig. 2. For instance, the shape and/or the cavity axis CA of the at least one cavity 30 may be curved.

The first section 30a is, for example, substantially cylindrical. The first section 30a comprises a diameter D1 and a length L1. In one aspect of the disclosure, the diameter D1 of the first section 30a preferably is larger than or equal to 100 µm and preferably is smaller than or equal to 160 µm. The length L1 of the first section 30a preferably is larger than or equal to 150 µm and preferably is smaller than or equal to 250 µm. The dimensions of this example allow for the culturing and imaging of, for example, mouse embryos. In the case of a different type of the at least one sample 50, the dimensions may differ from those indicated above. For example, an embryo in a post-implantation stage of development may require dimensions of the at least one cavity that lie in a range of up to one or more millimeters. In this case, the at least one cavity 30 may span a large portion of the hydrogel body 25, and the hydrogel body 25 may have a thinner structure for providing the contact and/or adhesion.

The second section 30b is, for example, substantially conical. The second section 30b comprises a first diameter D21, a second diameter D22, and a length L2. In one aspect of the disclosure, the first diameter D21 of the second section 30b preferably is larger than or equal to 100 µm and preferably is smaller than or equal to 160 µm. The second diameter D22 of the second section 30b preferably is larger than or equal to 30 µm and preferably is smaller than or equal to 90 µm. The length L2 of the second section 30b preferably is larger than or equal to 300 µm and preferably is smaller than or equal to 500 µm. The dimensions of this example allow for the culturing and imaging of, for example, an organoid or for implantation-stage mouse embryos. An example of the organoid is an intestine crypt.

The cavity 30 may further comprise a third section 30c. The third section 30c comprises a second diameter D22 and a length L3. The length L3 of the third section 30c preferably is larger than or equal to 10 µm and preferably is smaller than or equal to 50 µm. The dimensions of this example allow for the culturing and imaging of, for example, an organoid forming one or more cysts or for implantation-stage mouse embryos.

The at least one cavity 30 is dimensioned to allow for adhesion of the sample 50 to the wall 70 of the at least one cavity 30. The adhesion to the wall 70 of the at least one cavity 30 may be mediated by cell adhesion molecules, such as cadherins, selectins, or integrins, which belong to the class of transmembrane proteins and are located in a cellular membrane of the at least one sample 50. The cell-adhesion molecule-mediated adhesion is a biochemical adhesion, in which the cell-adhesion molecules bind to ligands such as glycoproteins (such as fibronectin or vitronectin), collagens, and laminins. The adhesion may be three-dimensional adhesion. The term "three-dimensional adhesion" is to be understood to mean that contact points of the contact surface, e.g. the wall 70, of the least one cavity 70, at which the contact surface is contacted by the at least one sample 50, when the at least one sample 50 is held by the at least one cavity 30, lie in a non-planar portion of the contact surface. The non-planar portion of the contact surface may be formed e.g. by local degradation and/or invasion of the hydrogel body 25 by the sample 50. The term "three-dimensional adhesion" is further to be understood to mean a mechanical contact of the at least one sample 50 with the wall 70 of the at least one cavity 30 that allows for growing and/or culturing the at least one sample. The at least one cavity 30 is dimensioned to provide an extracellular matrix for the sample. The at least one cavity 30 is configured and dimensioned to mimic biochemical and mechanical properties of, for example, native uterine tissue for ex vivo embryo development. The at least one cavity 30 may further be configured and dimensioned to mimic biochemical and mechanical properties of the native environment of other types of cell types, cell cultures, and/or organoids.

Fig.3a shows a top view of the sample mount 10 according to one aspect of the disclosure. The surface 25a of the hydrogel body 25 may have a rectangular shape, but is not limited thereto.

In the aspect of the sample mount 10 shown in Fig. 3a, a plurality of cavities 30 are arranged in the hydrogel body 25.

The sample mount 10 shown in Fig. 3a comprises three cavities 30. However, the number of cavities 30 may be different. For example, the sample mount 10 may comprise 50 or 500 cavities 30. The plurality of cavities 30 is arranged along the first direction A1. In an aspect of the disclosure, the plurality of cavities 30 is further arranged along the third direction A3. In this aspect, the dimensions of the plurality of cavities 30 and dimensions of the optical arrangement of the at least one illumination objective lens 85 and at least one detection objective lens 90, including the dimensions of a light-sheet for illumination, may determine a dimension of the plurality of cavities 30 in the third direction A3. The dimension of the plurality of cavities 30 may refer to a dimension of a single cavity of the plurality of cavities 30 or to a dimension of several cavities of the plurality of cavities 30. This aspect allows for efficient imaging of a plurality of sample 50 to achieve high-throughput imaging. The plurality of cavities 30 may be spaced apart along the first direction A1 and/or the third direction A3. The plurality of cavities 30 is arranged at the surface 25a of the hydrogel body 25.

Fig. 3b shows a top view of the sample mount 10 according to another aspect of the disclosure. In this aspect, the sample mount 10 differs from the sample mount 10 shown in Fig. 3a by a fluid connection between ones of the plurality of cavities 30 by means of a channel 31. The channel 31 is formed in the hydrogel 25. The channel 31 may be arranged at the surface 25a of the hydrogel body 25. The channel 31 may have an opening (not shown) for supplying the culture medium to the channel 31. The opening of the channel 31 may be provided at the surface 25a. The fluid connection between the plurality of cavities 30 provided by the channel 31 enables biochemical signaling (communication) between the plurality of samples 50 held in the plurality of cavities 30.

In one aspect, the microfluidic unit may comprise a network of channels 31, such as a microchannels. The network of channels 31 may be provided in the hydrogel body 25. The network of channels 31 provided in the hydrogel may be a network of microchannels, which may be referred to as "microvasculature". The network of channels 31 may fluidly connect the plurality of cavities 30. The fluid connection enables biochemical signaling (communication) between a plurality of samples 50 held in the plurality of cavities 30.

Fig. 4a shows a lateral view of an objective lens unit 80a of the microscope 80 (which is indicated in Figs. 4a-c, 5a-b, and 7 by a box 80 drawn around the objective lens unit 80a) for imaging the at least one sample 50 according to one aspect of the disclosure. The microscope 80 is, for example, a light-sheet fluorescence microscope. The sample mount 10 may be arranged in the microscope 80. The microscope 80 comprises at least one illumination objective lens 85, at least one detection objective lens 90, and the sample mount 10. In the aspect shown in Fig. 4a, the microscope 80 comprises two illumination objective lenses 85 and one detection objection lens 90.

The at least one illumination objective lens 85 has an illumination optical axis IA. In one aspect of the disclosure, more generally an illumination lens 85 may be used for illuminating the at least one sample 50. The at least one detection objective lens 90 has a detection optical axis DA. The detection optical axis DA is perpendicular to the illumination optical axis IA.

In the aspect shown in Fig. 4a, the two illumination objective lenses 85 each have an illumination optical axis IA. In the aspect shown in Fig. 4a, the two illumination optical axes IA o the two illumination objective lenses 85 may coincide.

The detection optical axis DA and the illumination optical axis IA form a plane. The plane formed by the detection optical axis DA and the illumination optical axis IA is, for example, parallel to a plane formed by the second direction A2 and the third direction A3. The plane formed by the detection optical axis DA and the illumination optical axis IA may be arranged vertically.

A plurality of cavities 30 may be arranged along at least one sampling direction SD in the sample holder 10. In the aspect of the disclosure shown in Fig. 4a, the at least one sampling direction SD is parallel to the first direction A1. In a further aspect of the disclosure, the plurality of cavities 30 are movable along the at least one sampling direction SD. Moving the plurality of cavities 30 enables imaging the plurality of samples 50 placed in the plurality of cavities 30. The sample mount 10 is moved in the at least one sampling direction SD when the samples 50 provided in the cavities 30 are to be imaged.

In the aspect shown in Fig. 4a, the sample mount 10 is moved in the at least one sampling direction SD, thereby allowing to image the samples 50. Arranging the sample mount 10 in the microscope 80 allows to image multiple samples 50 in a, for example, consecutive order. This aspect of the invention allows multiple ones of the samples 50 to be placed in the cavities 30 along the at least one sampling direction SD. Such an arrangement of objective lens unit 80a and the sample mount 10 will allow high throughput imaging of the multiple ones of the samples 50.

In a further aspect, the at least one sampling direction SD may be parallel to both the first direction A1 and the third direction A3. In this aspect, the sample mount 10 may be moveable along both the first direction A1 and the third direction A3. This aspect enables high throughput imaging of the at least one sample 50.

Fig. 4b shows a lateral view of objective lens unit 80a of the microscope 80 for imaging the at least one sample 50 according to a further aspect of the disclosure. In the aspect shown in Fig. 4b, the microscope 80 comprises one illumination objective lens 85 and two detection objection lenses 90. The one illumination objective lens 85 has an illumination optical axis IA. The two detection objective lenses 90 each have a detection optical axis DA. The two detection optical axes DA may be perpendicular to the illumination optical IA of the one illumination objective lens 85.

In the aspect shown in Fig. 4b, the two detection optical axes DA and the one illumination optical axis IA form a plane. In the aspect shown in Fig. 4b, the plane formed by the two detection optical axes DA and the one illumination optical axis IA is parallel to a plane formed by the second direction A2 and the third direction A3. The plane formed by the two detection optical axes DA and the one illumination optical axis IA form a plane may be arranged vertically.

As in the aspect shown in Fig. 4a, the arrangement of objective lens unit 80a and the sample mount 10 shown in Fig. 4b allows for imaging the plurality of samples 50 arranged in the plurality of cavities 30 of the sample holder 10 by moving the sample holder 10 along the at least one sampling direction SD. The imaging of the plurality of samples 50 held in the plurality of cavities 30 enables high-throughput imaging of live samples.

In the aspect shown in Fig. 4b, moving the sample mount 10 in the at least one sampling direction SD allows to image the plurality of samples 50 held in the plurality of cavities.

Fig. 4c shows a lateral view of objective lens unit 80a of the microscope 80 for imaging the at least one sample 50 according to a further aspect of the disclosure. In the aspect shown in Fig. 4c, the microscope 80 comprises one illumination objective lens 85 and one detection objection lens 90. The one illumination objective lens 85 has an illumination optical axis IA. The detection objective lens 90 has a detection optical axis DA. The detection optical axis DA is arranged at an angle θ relative to the illumination optical axis IA. In one aspect, the angle θ may be equal to 90° (ninety degrees). In another aspect, the angle θ may deviate from 90°, depending, for example, on the type of microscope 80 used. In the example shown in Fig. 4c, the cavity axis CA of the at least one cavity 30 is arranged parallel to the illumination objective lens 85 with the illumination optical axis IA and perpendicular to the detection objective lens 90 with the detection optical axis DA. In another aspect, the cavity axis CA may be perpendicular to the illumination objective lens 85 with the illumination optical axis IA, and parallel to the detection objective lens 90 with the detection optical axis DA.

As in the aspects shown in Figs. 4a and 4b, the detection optical axis DA and the illumination optical axis IA form a plane that is arranged vertically.

As in the aspect shown in Figs. 4a and 4b, the arrangement of objective lens unit 80a and the sample mount 10 shown in Fig. 4c allows for imaging the plurality of samples 50 arranged in the plurality of cavities 30 of the sample holder 10 by moving the sample holder 10 along the at least one sampling direction SD. The imaging of the plurality of samples 50 held in the plurality of cavities 30 enables high-throughput imaging of live samples. The moving of the sample mount 10 in the microscope 80 allows to image multiple samples 50 in a, for example, consecutive order. Holding the plurality of samples 50 in the plurality of cavities in the culturing environment 60 allows for nurturing and growing the plurality of live samples 50. The nurturing and growing of the plurality of samples 50 in the plurality of cavities 30 allows to image the plurality of samples 50 during developmental phases, such as, e.g., embryonic phases or cell division phases, or in pathological conditions, such as cancerous cells. The arrangement shown in Figs. 4a-4c allows for high throughput imaging of the plurality of samples 50 during developmental or pathological phases.

Fig. 5a shows a top view of the microscope 80 for imaging the plurality of samples 50 according to one aspect of the disclosure comprising multiple sample mounts 10, 10' being arranged in a sample mount stack 10S (see also Fig. 5b). In this aspect, the sample mounts 10, 10' may have a cylindrical shape. The shape is, however, not limited to a cylindrical shape. The sample mounts 10, 10' of this aspect comprise the hydrogel body 25 and the at least one cavity 30 arranged in the hydrogel body 25.

In this aspect, the hydrogel body 25 of the sample mounts 10, 10' may have a cylindrical shape extending along the second direction A2. The cylindrical block has a radius measured along the first direction A 1 and/or the third direction A3. The cylindrical block has a height measured along the second direction A2. The cylindrical block has a center axis extending parallel to the second direction A2.

The sample mounts 10 and 10' shown in Fig. 5b comprise ones of the at least one cavity 30 and 30', respectively. The ones of the at least one cavity 30 and 30' are arranged at ones of the surface 25a and 25a' of ones of the hydrogel body 25 and 25', respectively. The ones of the at least one cavity 30 and 30' may be arranged to coincide with the center axis of the cylindrical block of the hydrogel 25.

The sample mount 10 may be moved relative to the plane formed by the detection optical axis DA and the illumination optical axis IA of the microscope 80. In the aspect shown in Fig. 5a, one illumination objective lens 85 and one detection objective lens 90 are shown. However, this aspect allows for arranging two illumination objective lenses 85 and two detection objective lenses 90, wherein the two illumination objective lenses 85 are arranged opposite one another, and wherein the two detection objective lenses 90 are arranged opposite one another. The optical axes IA of the two oppositely arranged illumination objective lenses 85 may coincide. The optical axes DA of the two oppositely arranged detection objective lenses 90 may coincide. This arrangement allows multi-view imaging of the plurality of samples 50. Multi-view imaging of the plurality of samples 50 enables imaging at increased resolution and reducing photo-damage to the plurality of samples 50. The plane formed by the detection optical axis DA and the illumination optical axis IA is, for example, parallel to a plane formed by the first direction A1 and the third direction A3. The sample mount 10 is moved along the at least one sampling direction SD. Furthermore, the sample mount 10 may be rotated about the sampling direction SD to facilitate acquisition of multiple images of ones of the plurality of sample 50 from several angles. This multi-view imaging allows for larger imaging volumes.

The at least one sampling direction SD may extend in the vertical direction. The at least one sampling direction SD may be parallel to the second direction A2. The at least one sampling direction SD may be parallel to the center axis of the cylindrical block of the hydrogel 25.

In the aspect shown in Fig. 5a, moving the sample mount 10 in the at least one sampling direction SD and/or rotating the sample mount 10 about the at least one sampling direction SD allows to image the plurality of samples 50. Arranging the sample mount 10 in the microscope 80 allows to image the plurality of samples 50 at high throughput. The plurality of samples 50 may be imaged in consecutive order. This aspect of the invention allows the plurality of samples 50 to be placed in the plurality of cavities 30. This arrangement will allow for high throughput imaging of the multiple ones of the samples 50 during culturing the plurality of samples 50 in the culturing environment, as explained above.

Fig. 5b shows a lateral cross-sectional view of the sample mount stack 10S according to one aspect of the disclosure. As can be seen from Fig. 5b, multiple ones of the sample mounts 10, 10' are stacked on top of each other using at least one connector 35. In one aspect, the sample mounts 10, 10' may be substantially identical. In one aspect, the plurality of cavities 30, arranged in the sample mount stack 10S, may be substantially identical. In another aspect, the different ones of the sample mounts 10, 10' may comprise different numbers of cavities 30 provided within the hydrogel 25. In a further aspect, the sample mounts 10, 10' may comprise ones of the cavities 30 that have a different shape and/or different size. In this aspect, the at least one sampling direction SD may be aligned with the cavity axes CD of the plurality of cavities 30. The sample mounts 10, 10' are movable along the at least one sampling direction SD and rotatable about an axis parallel to the sample direction SD (or A2), for imaging of the samples 50.

The connector 35 is adapted to arrange the plurality of sample mounts 10, 10' in the sample mount stack 10S. In one aspect, the connector 35 may be adapted to fluidly connect the sample mount 10 to the perfusion unit 40 by means of tubing (e.g., microtubing PX as shown in Fig. 5b). The connector 35 may fluidly connect ones of the plurality of cavities 30 of the sample mount stack 10S with the perfusion unit 40.

Arranging the sample mount stack 10S in the microscope 80 allows to image multiple samples 50, for example, in a consecutive order. This aspect of the invention allows multiple ones of the samples 50 to be placed in the plurality of cavities 30 of the sample mount 10, 10'. Such an arrangement will allow high throughput imaging of the plurality of samples 50.

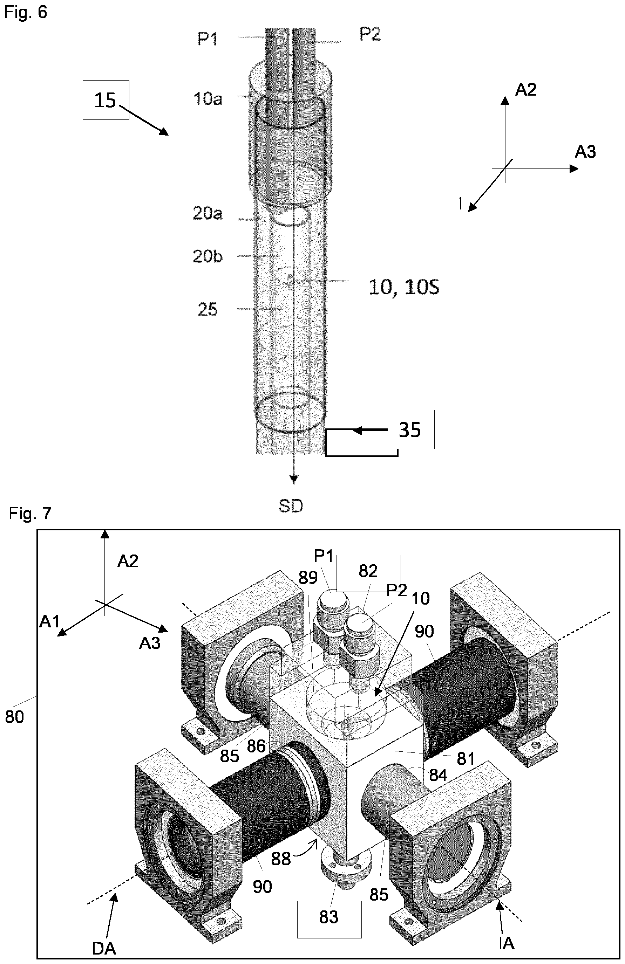

Fig. 6 shows a perspective view of an arrangement 15 including the sample mount 10 according to a further aspect. The arrangement 15 shown in Fig. 6 extends in the second direction A2. The arrangement 15 shown in Fig. 6 comprises a cap 10a, an outer housing 20a, an inner housing 20b, the hydrogel body 25, the connector 35, and perfusion tubing P1, P2. The perfusion tubing P1, P2 may comprise microtubing.

The outer housing 20a is connected to the cap 10a of the arrangement 15. The outer housing 20a and the inner housing 20b are transparent. The outer housing 20a forms an outer compartment. The inner housing 20b forms an inner compartment. The inner housing 20b has a smaller diameter than the outer housing 20a. The inner housing 20b is arranged within the outer housing 20a. The inner housing 20b is provided in the outer compartment of the outer housing 20a. The inner housing 20b may be arranged concentrically with the outer housing 20a.

The outer housing 20a and the inner housing 20b are transparent. The sample mount 10 is arranged within the inner compartment formed by the inner housing 20b. The sample mount 10 comprises the hydrogel body 25 and the at least one cavity 30. The at least one sample 50 is arranged in the at least one cavity 30. In a further aspect, the sample mount stack 10S may be arranged within the inner compartment formed by the inner housing 20b.

The inner compartment formed by the inner housing 20b is fluidly connected to the outer compartment formed by the outer housing 20a of the sample mount 10. In the example shown in Fig. 6, the perfusion tubing P1, P2 comprises a first perfusion tubing P1 and a second perfusion tubing P2. The first perfusion tubing P1 and the second perfusion tubing P2 are fluidly connected to a medium exchange circuit or perfusion unit 40 (see also description of Fig. 8).

In one aspect, the inner housing 20b may be connected to a further one of the inner housing 20b by means of the connector 35, thus forming the stack 10S. In another aspect, the stack 10S may be formed by means of the outer housing 20a and the connector 35, without using the an inner housing 20b. In the aspect shown in Fig. 6, moving the sample mount 10 in the at least one sampling direction SD allows to image the samples 50. Arranging the sample mount 10 in the microscope 80 allows to image multiple samples 50. The imaging may be done, for example, in consecutive order. This arrangement will allow high throughput imaging of the multiple ones of the samples 50.

Fig. 7 shows a perspective view of an aspect of the microscope 80 according to a further aspect of the disclosure. In the example shown in Fig. 7, the microscope 80 has two of the sample mount 10 shown in Fig. 6 arranged therein. However, the number of the sample mount 10 arranged in the microscope shown in Fig. 7 may be smaller, i.e., one, or larger, i.e., three or more.

In the aspect shown in Fig. 7, the microscope 80 comprises two illumination objective lenses 85 and two detection objection lenses 90. The two illumination objective lenses 85 each have an illumination optical axis IA. The two detection objective lenses 90 each have a detection optical axis DA. The detection optical axes DA are perpendicular to the illumination optical axes IA.

The detection optical axes DA and the illumination optical axes IA form a plane. The plane formed by the detection optical axis DA and the illumination optical axis IA is, for example, parallel to a plane formed by the first direction A1 and the third direction A3. The plane formed by the detection optical axis DA and the illumination optical axis IA form a plane is, for example, horizontally arranged.

The microscope 80 further comprises a microscope chamber 81, a chamber lid 82, and a sample holder adapter 83. The microscope chamber 81 is optically accessible to the objective lenses, e.g., through openings 84, 86, such that imaging of the at least one sample 50 provided in the sample mount 10 in the microscope chamber 81 using the at least one illumination objective lens 85 and the at least one detection objective lens 90 is enabled.

In an aspect, the microscope chamber 81 comprises at least one first lens mount opening 84 for receiving the at least one illumination objective lens 85 in the at least one first lens mount opening 84 of the microscope chamber 81. The microscope chamber 81 further comprises at least one second lens mount opening 86 for receiving the at least one detection objective lens 90 in the at least one second lens mount opening 86 of the microscope chamber 81. The at least one first lens mount opening 84 and the at least one second lens mount opening 86 enable mounting the at least one illumination objective lens 85 and the at least one detection objective lens 90, respectively, to the microscope chamber 81.

The at least one first lens mount opening 84 and the at least one second lens mount opening 86 may be sealed using rubber and/or silicone grease. The sealing prevents leakage of an immersion medium contained in the sample chamber 81 for immersing the at least one illumination objective lens 85 and/or the at least one detection objective lens 90.

The microscope chamber 81 further has a bottom opening 88 that is used to provide access of the sample holder adapter 83 to the inside the microscope chamber 81. The sample holder adapter 83 may be rotated and translated via stages (not shown) to which the sample holder adapter 83 is attached. The stages are arranged below the chamber.

An upper opening 89 is used to mount the sample mount 10 on the sample holder adapter 83. The mounting of the sample mount 10 enables precise positioning of the at least one sample 50. This aspect further enables imaging of a region or volume of interest of the at least one sample 50.

The microscope chamber 81 may be sealed off using the chamber lid 82 after the mounting of the sample mount 10 on the sample holder adapter 83. The sealing of the microscope chamber 81 prevents unwanted leakage of gas from the microscope chamber 81.

The chamber lid 82 may have multiple holes for gas and medium exchange using the perfusion tubing P1, P2. In the aspect shown in Fig. 7, the chamber lid 82 holds adapter pieces to connect perfusion tubing P1, P2 from outside the microscope chamber 81 to the tubes which are connected to the cap on the sample holder 10. In another aspect, the lid 82 may be an integral part of the microscope chamber 81. The multiple holes for gas and medium exchange using the perfusion tubing P1, P2 may, in another aspect, be provided in the microscope chamber 81 or both the microscope chamber 81 and the chamber lid 82.

The arrangement shown in Fig. 7 will allow for a illumination of the at least one sample 50 provided in the sample mount 10 by mounting two oppositely arranged illumination objective lenses 85 as well as two oppositely arranged detection objective lenses 90 to the microscope chamber 81. This arrangement further allows to reduce absorption and scattering artefacts when imaging the at least one sample 50 and allowing a more homogeneously sampled 3D volume. Furthermore, rotation of the at least one sample 50 allows to orientate the sample 50 as desired. Furthermore, by acquiring the volumes from two or more angles (e.g. four views or more), the sampling may be increased and isotropic resolution approximated.

Fig. 8 shows schematic view of the medium exchange unit or perfusion unit 40. The medium exchange unit 40 comprises a medium exchange circuit. The medium exchange circuit may comprise at least a first pump PM1, a gas mixer GM, and a microtubing PX comprising at least one tubing P1, P2. Depending on the type of the first pump PM1, the medium exchange unit may comprise a second pump PM2. In the example shown in Fig 8, the medium exchange unit 40 is fluidly connected to the sample holder 10 using the first tubing P1 and the second tubing P2. The medium exchange unit 40 serves to provide a culture medium 62 and/or a gas 64 to the sample holder 10 and/or the at least one cavity 30.

Fig. 9 shows a flow chart describing a method 100 for manufacturing of the sample mount 10. The method 100 comprises a step S100 of providing, e.g., casting, a hydrogel in the mold 20. The hydrogel provided in the mold 20 is moldable. The hydrogel may be a liquid hydrogel. The hydrogel may be made from pulverized hydrogel particles, which are mixable with water. After mixing the pulverized hydrogel particles with water, the hydrogel is generated. The mold 20 may be transparent.

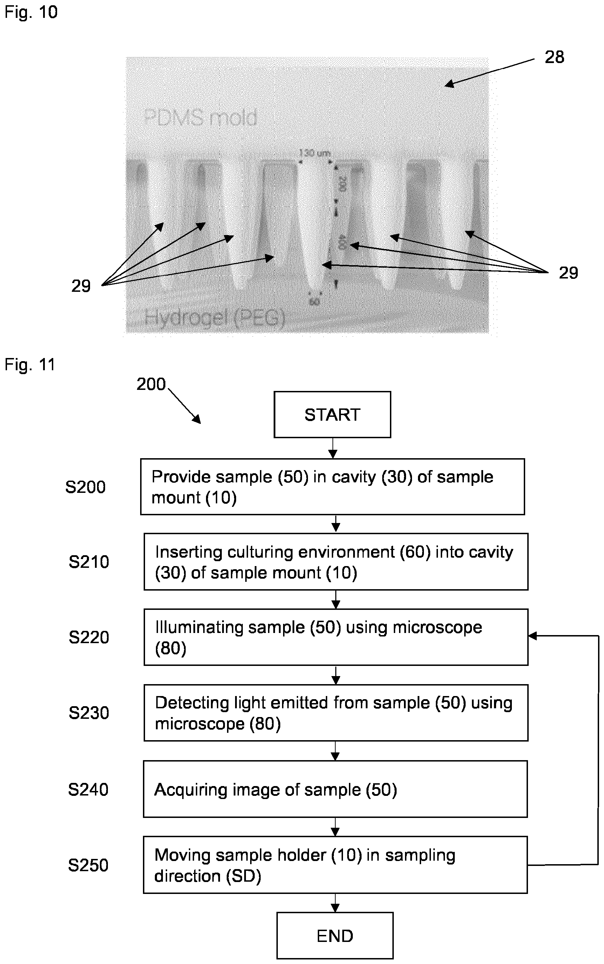

The method further comprises a step S110 of inserting a stamp 28 (see Fig. 10) into the moldable hydrogel to form at least one cavity 30. The stamp 28 may be made from a polydimethylsiloxane (PDMS). The stamp 28 and the hydrogel body 25 may be covered with Phosphate Buffered Saline (PBS). The stamp 28 may comprise a plurality of micropillars 29. The plurality of micropillars 29 may have geometries corresponding to the geometries of a plurality of cavities 30. In Fig. 10, the plurality of micropillars 29 is arranged in a two-dimensional array. However, the plurality of micropillars 29 may be differently arranged, e.g., along a line or plurality of lines. Arranging the plurality of micropillars 29 along lines enables forming a plurality of cavities 30 that are arranged along the at least one sampling direction SD (see above).

The dimensions shown in Fig. 10 for one of the plurality of micropillars 29 are merely exemplary. For a specific application, the dimensions of the plurality of micropillars 29 may be chosen dependent on the type of the sample 50 to be imaged. The type of the sample includes, but is not limited, an animal or human embryo, a tissue sample, e.g., from a biopsy, or an organoid

The method further comprises a step S120 of hardening the hydrogel to form a hydrogel body 25. The hardening of the hydrogel is achieved by allowing the hydrogel to solidify in an incubator. The solidifying may take, for example, but not limited to, 30-40 minutes. The incubator may provide a temperature of 37° C during the solidifying.

The method further comprises a step S130 of removing the stamp 28 from the hardened hydrogel. The PBS may be provided before the step of removing the stamp 28.

The method may further comprise a step S140 of treating the surface of the wall 70 of the at least one cavity 30 and/or of the hydrogel body 25. The treating of the surface of the wall 70 and the hydrogel 25 of the at least one cavity 30 comprises manipulating the physicochemical properties of the hydrogel by means of light exposure and/or chemical exposure. The physicochemical properties of the wall 70 and/or of the hydrogel 25 may be manipulated by at least one of an enzymatic degradation, a non-enzymatic reaction, a UV radiation treatment, an IR radiation treatment, and/or a laser treatment (see above). The laser treatment may include using pulsed laser light with pulse lengths in the picosecond range or the femtosecond range. Absorption of the laser light, in particular non-linear absorption, enables confining the laser treatment to a focal region of an optical system used to provide the laser treatment without impacting on neighboring regions of the wall 70 and/or the hydrogel 25.

In one aspect of the disclosure, the step S140 of treating the surface of the wall 70 of the least one cavity 30 and/or of the hydrogel body 25 may occur after mounting of the sample mount 10 in the microscope 80. For instance, the treating of the surface of the wall 70 of the least one cavity 30 and/or of the hydrogel body 25 may happen parallel to the method of imaging at least one sample (see below).

Fig. 11 shows a flowchart of a method 200 for imaging at least one sample 50 in a microscope 80. The method 200 comprises a step of providing S200 the at least one sample 50 in at least one cavity 30 of the sample mount 10. The step S200 may comprise accessing the at least one cavity 30 from above and inserting the at least one sample 50 into the at least one cavity 30 from above.

The method further comprises a step S210 of culturing the at least one sample 50. The step of culturing S210 may comprise providing a culturing environment 60 in the at least one cavity 30. The step S210 may comprise inserting a culture medium 62 into the at least one cavity 30. The step S210 may further comprise providing at least one gas, e.g., one or more of oxygen, nitrogen, or carbon dioxide, to the culturing environment 60. The step S210 may further comprise exchanging one or more of the culture medium 62 and the at least one gas 64. Step S210 may, in another aspect, be performed before step S200. In a further aspect, step S200 and step S210 may be performed simultaneously.

The method of imaging at least one sample 50 may further comprise a step S220 of illuminating the at least one sample 50 by means of at least one illumination objective lens 85 having an illumination optical axis IA. The method of imaging the at least one sample 50 may further comprise a step S230 of detecting light emitted or reflected by the at least one sample 50 by means of at least one detection objective lens 90 having a detection optical axis DA, the detection optical axis DA being perpendicular to the illumination optical axis IA.

The method of imaging at least one sample 50 may further comprise acquiring at least one image in step S240 of the at least one sample 50. The at least one image may be acquired in at least one color channel. The acquiring of the at least one image comprises processing the light emitted, transmitted, refracted, scattered or reflected by the at least one sample 50 in order to obtain, for example, a 2D and/or a 3D-image of the at least one sample 50. In another aspect, the acquiring of the at least one image may further comprise detecting photoacoustic signals for photoacoustic imaging.

The method 200 of imaging at least one sample 50 may further comprise a step S250 of moving the sample mount 10 in the at least one sampling direction SD. The step S250 may further comprise rotating the at least one sample 50, e.g., about the at least one sampling direction SD. The moving and/or rotating of the sample mount 10 enables sampling a three-dimensional sample volume, e.g., an image stack.

After the step S250 of moving the sample mount 10 in the at least one sampling direction SD, the method 200 for imaging of at least one sample 50 may return to step 220 of illuminating the at least one sample 50.

The method 200 for imaging of the sample 50 allows to image the at least one sample 50 whilst culturing the at least one sample 50 in culturing environment. The culturing enables growing and/or feeding the at least one sample and thereby imaging the at least one sample 50 over a period, such as developmental stages. During the period, the at least one sample 50 may develop and/or grow. The imaging method thus enables imaging the at least one sample 50 while the at least one sample 50 undergoes developmental changes. Moving the at least one sample 50 along the at least one sampling direction SD enables high-throughput imaging of the at least one sample 50.

The culturing further enables manipulating growth and/or development conditions during experiments.

The microscope 80 may further comprise a control system for controlling the culturing environment, such as the gas and/or the culturing medium, and/or the light radiation treatment, such as the UV radiation treatment and/or the IR radiation treatment. The controlling may be based on the imaging of the at least one sample. The imaging enables measuring parameters relating to growth and/or development of the at least one sample 50. The measured parameters may be used to change control settings of the control system. In this way, a feedback from the detected growth and/or development of the at least one sample 50 to the culturing of the at least one sample 50 is achieved.

### Reference Numerals

- 10: sample mount
- 10S: sample mount stack
- 20: housing, mold
- 25: hydrogel body
- 28: stamp
- 29: micropillars
- 30: cavity
- 30a: first section
- 30b: second section
- 35: connector
- PX: microtubing
- P1: first perfusion tubing connector/adapter
- P2: second perfusion tubing connector/adapter
- 40: medium exchange unit
- PM1: first pump
- PM2: second pump
- GM: gas mixer
- 50: sample
- 60: culturing environment
- 62: culture medium
- 64: gas
- 66: waste medium
- 70: wall
- 80: microscope
- 80a: objective lens unit
- 81: microscope chamber
- 82: microscope lid
- 83: sample holder adapter
- 84: first lens mount opening
- 85: illumination objective lens
- 86: second lens mount opening
- 88: bottom opening
- 89: upper opening
- 90: detection objective lens
- IA: illumination optical axis
- DA: detection optical axis
- SD: sampling direction
- A1: first direction
- A2: second direction
- A3: third direction

## Claims

1. A sample mount (10) for imaging at least one sample (50), the sample mount (10) comprising:
- a hydrogel body (25); and
- at least one cavity (30) arranged in the hydrogel body (25) for holding the at least one sample (50) in a culturing environment (60).

2. The sample mount (10) of claim 1, wherein the culturing environment (60) comprises gas, such as oxygen, nitrogen, and/or carbon dioxide, and/or a liquid culture medium.

3. The sample mount (10) of claim 1 or 2, wherein the at least one cavity (30) is dimensioned to provide a matrix to provide mechanical support for positioning, growth, and/or development of the at least one sample (50).

4. The sample mount (10) according to any of the above claims, wherein the sample mount (10) comprises a plurality of cavities (30), wherein the plurality of cavities (30) is arranged along a first direction (A1) and/or a second direction (A2) and/or a third direction (A3).

5. The sample mount (10) according to any one of the above claims, wherein the hydrogel body (25) comprises one or more hydrogels arranged in one or more layers.

6. The sample mount (10) according to claim 5, wherein the plurality of cavities (30) is arranged in several ones of the one or more layers.

7. The sample mount (10) according to any of the above claims, wherein the hydrogel body (25) is made from an animal source, a plant and/or fungi source, or a chemically synthesized source.

8. The sample mount (10) according to claim 7, wherein the hydrogel body (25) comprises one or more components, the one or more components comprising one or more amino acids, polypeptides, proteins, nucleotides, oligonucleotides, nucleic acids, carbohydrates, lipids, vitamins, cholines, minerals, and/or biological cells.

9. The sample mount (10) according to claim 8, wherein the one or more proteins comprise one or more of laminins, nidogens, collagens, glycoproteins, and/or proteoglycans.

10. The sample mount (10) according to claim 7 or 8, wherein the one or more carbohydrates comprise agarose and/or poly-ethylene glycol.

11. The sample mount (10) according to any of the above claims, wherein the hydrogel body (25) is cross-linked and/or coated with one or more of peptides, such as arginylglycylaspartic acid, and/or extracellular matrix components, such as laminins, collagens, proteoglycans, and/or glycoproteins.

12. The sample mount (10) according to any of the above claims, wherein physicochemical properties of the hydrogel body (25) are manipulated by at least one of an enzymatic degradation, a non-enzymatic reaction, a UV-light radiation treatment, and/or an IR-light radiation treatment.

13. The sample mount (10) according to any of the above claims, wherein the at least one cavity (30) extends along a cavity axis (CA), wherein the cavity axis (CA) is parallel to the second direction (A2) or is inclined relative to the second direction (A2).

14. The sample mount (10) according to any of the above claims, further comprising connector (35) attachable to the sample mount (10), wherein the sample mount (10) attached to the connector (35) is arrangeable in a sample mount stack (10S) comprising a plurality (10, 10') of the sample mounts (10).

15. The sample mount (10) according to claim 13, wherein the connector (35) is adapted to fluidly connect the sample mount (10) to the culture medium and/or the gas to provide the culturing environment (60).

16. An objective lens unit (81a) for a microscope (80) for imaging a sample (50), the objective lens unit (81a) comprising
- at least one illumination lens (85) having an illumination optical axis (IA),
- at least one detection objective lens (90) having a detection optical axis (DA), which is perpendicular to the illumination optical axis (IA), and
- a sample mount (10) according to one of claims 1 to 14.

17. The objective lens unit (81a) according to claim 15, wherein the plurality of cavities (30) are movable along at least one sampling direction (SD).

18. A method (100) of manufacturing a sample mount (10) for a microscope (80), the method (100) comprising:
- providing (S100) a moldable hydrogel in a mold (20);
- inserting (S110) a stamp (28) into the moldable hydrogel;
- hardening (S120) the hydrogel (25), to form a hydrogel body (25) by means of the mold and at least one cavity (30) by means of the stamp (28); and
- removing (S130) the stamp (28) from the hardened hydrogel body (25).

19. The method of claim 18, further comprising treating (S140) a surface of the at least one cavity (30) and/or the body of the hydrogel 25 (claim 12).

20. A method (200) of imaging at least one sample (50) in a microscope (80), the method (200) comprising:
- providing (S200) the at least one sample (50) in a at least one cavity (30) of the sample mount (10);
- providing (S210) a culturing environment (60) in the at least one cavity (30);
- illuminating (S220) the at least one sample (50) by means of at least one illumination lens (85) having an illumination optical axis (IA);
- detecting (S230) light emitted, transmitted, refracted, scattered or reflected by the at least one sample (50) by means of at least one detection objective lens (90) having a detection optical axis (DA), the detection optical axis (DA) being perpendicular to the illumination optical axis (IA); and
- acquiring (S240) at least one image of the at least one sample (50) in the at least one cavity (30).

21. The method (200) for imaging a sample (50) according to claim 19, further comprising moving (S250) the sample mount (10) in at least one sampling direction (SD).
